# EUROPEAN PATENT SPECIFICATION

(11) **EP 2 965 040 B1**
(45) Date of publication and mention of the grant of the patent: **02.08.2017**
(21) Application number: 14713344.1
(22) Date of filing: 07.03.2014
(51) Int. Cl.: G01C 21/20, G01C 21/32, G06F 17/30

(54) **PYRAMID MAPPING DATA STRUCTURE FOR INDOOR NAVIGATION**
PYRAMIDENFÖRMIGE KARTENDATENSTRUKTUR FÜR INNENRAUMNAVIGATION
STRUCTURE DE DONNÉES CARTOGRAPHIQUE PYRAMIDALE POUR NAVIGATION EN INTÉRIEUR

(30) Priority: 08.03.2013 US 201313791079
(43) Date of publication of application: 13.01.2016
(73) Proprietor: Qualcomm Incorporated, San Diego, CA 92121-1714 (US)
(72) Inventor: CHEN, Jiajian, San Diego, California 92121-1714 (US); CHAO, Hui, San Diego, California 92121-1714 (US); DAS, Saumitra Mohan, San Diego, California 92121-1714 (US)
(74) Representative: Wimmer, Hubert
(86) International application number: PCT/US2014/021589
(87) International publication number: WO 2014/138538

(56) References cited:
- US-A1- 2002 133 289
- US-A1- 2008 016 472
- US-B1- 8 223 172

## Description

### Field of Disclosure

Embodiments of the present invention relate to a method and architecture for creating and using multi-level geometry for indoor maps with different level of details.

### Background

Electronic devices (cellular telephones, wireless modems, computers, digital music players, Global Positioning System units, Personal Digital Assistants, gaming devices, etc.) have become a part of everyday life. Small computing devices are now placed in everything from automobiles to housing locks. The complexity of electronic devices has increased dramatically in the last few years. For example, many electronic devices have one or more processors that help control the device, as well as a number of digital circuits to support the processor and other parts of the device.

Mobile devices now support many processor dependent applications. Navigation based on maps, supported, for example, by Global Positioning System satellites, has become quite popular.

For outdoor navigation, an earth map is stored as hierarchical tiles in image format. Tiles are predefined and static and are at different resolution. Zoom level and location defines what tiles to take to compose the images on the screen. This format reduces the latency of getting the most relevant information for the user. However, such standards do not exist yet for indoor maps.

For indoor navigation, maps are often stored in Geography Markup Language (GML), a vector XML format encoding standard for geographic information developed by the OpenGIS Consortium (OGC). Currently most of GML maps (e.g. Destination Maps XML, by NAVTEQ® GML), have only a single level of the geometry of the venue (a flat structure), such as the polygon description of destinations or Points of Interest (POIs).

Current approaches do not provide multi-level geometry with different levels of details, which may not be flexible for display on different devices, or on a same device with different settings or in different scenarios. Document US2008/0016472 A1 discloses an interactive geographic information system server that provides only a subset of the overall database to a mapping module at a client terminal, by converting complex polygon data of buildings to simplified polygon data at different, hierarchical, levels of detail. The hierarchical map data structure is, however, not based on POI types received from a user.

### SUMMARY

An embodiment is directed to generating a polygon representation of a plurality of points of interest (POIs) in a scene having a corresponding base level map of the scene, and creating a new level map including a reduced number of polygon representations of POIs on the basis of elimination of POIs having a lower than specified POI importance level. In another embodiment, a mobile device (e.g., the user device) can specify the specified POI importance level to trigger the generation and delivery of the new level map which conforms to the specified POI importance level so that the new level map can be displayed to a user of the mobile device (e.g., in conjunction with navigation instructions to one or more of the remaining POIs).

### BRIEF DESCRIPTION OF THE DRAWINGS

FIG. 1 illustrates one configuration of a wireless communication system, in accordance with certain embodiments of the disclosure.
FIG. 2 illustrates a method of generating a display map based on a pyramid hierarchical reduction of data from a base map data structure in accordance with certain embodiments of the disclosure.
FIG. 3 is a graphical illustration of the method described in FIG. 2 in accordance with certain embodiments of the disclosure.

### DETAILED DESCRIPTION

The detailed description set forth below in connection with the appended drawings is intended as a description of exemplary embodiments of the present invention and is not intended to represent the only embodiments in which the present invention can be practiced. The term "exemplary" used throughout this description means "serving as an example, instance, or illustration," and should not necessarily be construed as preferred or advantageous over other embodiments. The detailed description includes specific details for the purpose of providing a thorough understanding of the present invention. However, it will be apparent to those skilled in the art that the present invention may be practiced without these specific details. In some instances, well known structures and devices are shown in block diagram form in order to avoid obscuring the concepts of the present invention.

A method is disclosed for creating and using multi-level geometry for indoor maps with different levels of detail. With a multi-level hierarchical structure from coarse to fine, this method can adjust the complexity of geometry loaded in mobile devices for display according to the context and resolution or zoom level. It may also reduce the latency and power consumption of map loading and information display as a result of the reduced volume of data received by or transmitted from the mobile device.

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), CDMA2000, etc. UTRA includes Wideband CDMA (W-CDMA). CDMA2000 covers IS-2000, IS-95 and technology such as Global System for Mobile Communication (GSM).

An OFDMA network may implement a radio technology such as Evolved UTRA (E-UTRA), the Institute of Electrical and Electronics Engineers (IEEE) 802.11, IEEE 802.16, IEEE 802.20, Flash-OFDAM®, etc. UTRA, E-UTRA, and GSM are part of Universal Mobile Telecommunication Ssytem (UMTS). Long Term Evolution (LTE) is a release of UMTS that uses E-UTRA. UTRA, E-UTRA, GSM, UMTS, and LTE are described in documents from an organization named "3^{rd} Generation Partnership Project" (3GPP). CDMA2000 is described in documents from an organization named "3^{rd} Generation Partnership Project 2" (3GPP2). These various radio technologies and standards are known in the art. For clarity, certain aspects of the techniques are described below for LTE, and LTE terminology is used in much of the description below. It should be noted that the LTE terminology is used by way of illustration and the scope of the disclosure is not limited to LTE. Rather, the techniques described herein may be utilized in various application involving wireless transmissions, such as personal area networks (PANs), body area networks (BANs), location, Bluetooth, GPS, UWB, RFID, and the like. Further, the techniques may also be utilized in wired systems, such as cable modems, fiber-based systems, and the like.

Single carrier frequency division multiple access (SC-FDMA), which utilizes single carrier modulation and frequency domain equalization has similar performance and essentially the same overall complexity as those of an OFDMA system. SC-FDMA signal may have lower peak-to-average power ration (PAPR) because of its inherent single carrier structure. SC-FDMA may be used in the uplink communications where the lower PAPR greatly benefits the mobile terminal in terms of transmit power efficiency.

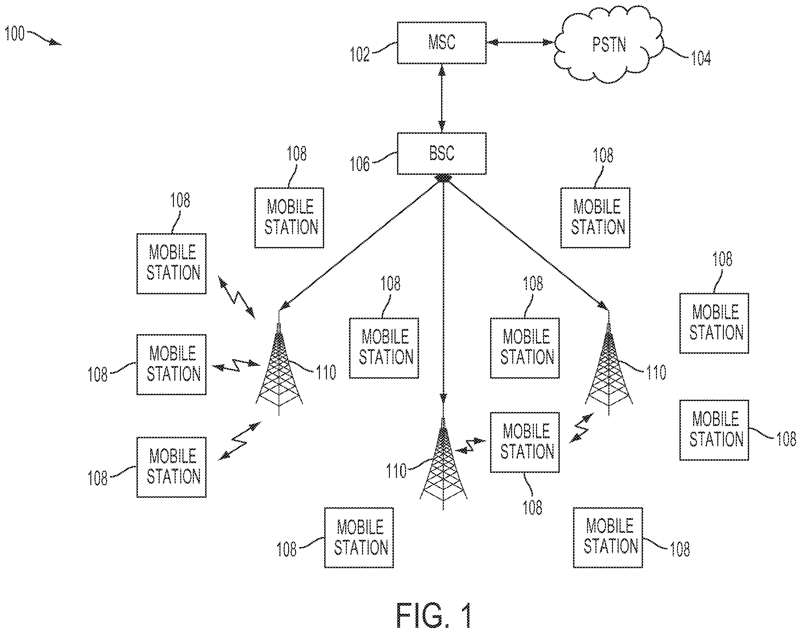

FIG. 1 illustrates a wireless system 100 that may include a plurality of mobile stations 108, a plurality of base stations 110, a base station controller (BSC) 106, and a mobile switching center (MSC) 102. The wireless system 100 may be GSM, EDGE, WCDMA, CDMA, etc. The MSC 102 may be configured to interface with a public switched telephone network (PTSN) 104. The MSC 102 may also be configured to interface with the BSC 106. There may be more than one BSC 106 in the wireless system 100. Each base station 110 may include at least one sector, where each sector may have an omnidirectional antenna or an antenna pointed in a particular direction radially away from the base stations 110. Alternatively, each sector may include two antennas for diversity reception. Each base station 110 may be designed to support a plurality of frequency assignments. The intersection of a sector and a frequency assignment may be referred to as a channel. The mobile stations 108 may include cellular or portable communication system (PCS) telephones.

During operation of the wireless system 100, the base stations 110 may receive sets of reverse link signals from sets of mobile stations 108. The mobile stations 108 may be involved in telephone calls or other communications. Each reverse link signal received by a given base station 110 may be processed within that base station 110. The resulting data may be forwarded to the BSC 106. The BSC 106 may provide call resource allocation and mobility management functionality including the orchestration of soft handoffs between base stations 110. The BSC 106 may also route the received data to the MSC 102, which provides additional routing services for interfacing with the PSTN 104. Similarly, the PTSN 104 may interface with the MSC 102, and the MSC 102 may interface with the BSC 106, which in turn may control the base stations 110 to transmit sets of forward link signals to sets of mobile stations 108.

An indoor map includes, for example a data structure of geometry of features (e.g., offices, elevators, restaurants, which may be referred to as points of interest (POI)) as a list of objects, such as polygons, for example, indicating one or more of location, size, name, etc. This may constitute the base layer of a "map pyramid." At a higher level of detail, when required, in a next layer, the geometry of the map may be simplified, for example, to show only a region of the indoor map (e.g., a floor, a part of a floor, type of POI, etc.). Polygons, lines and other geometrical features and/or less important POIs may be removed from the layer. For example, if the POIs of interest are, e.g., law offices, all other features may be removed. If the POIs are related to safety and evacuation, only stairwells, exit doors, elevators, service shafts, etc., may be retained and offices may be removed.

An indoor map data structure is the core data in indoor navigation applications. Maps are formatted and stored in multi-level geometry pyramid structure from fine to coarse and from dense to thin. An application accessed by the user selects the most appropriate level from the map pyramid structure to display. The selection is based on a group of criteria including, but not limited to, one or more of the screen size of the device, the degree of zoom-in for a desired level of detail from user's input, the battery level, etc. The multi-level map geometry pyramid allows flexible display for various devices. Thus, a user may select a display with minimal detail to achieve fast data transfer with adequate navigation information, select more detail to provide more accurate geographical imaging and meta information about one or more POIs, or some intermediate level of detail. Thus, level selection in map display is driven by device constraints as well as by user need for detail, such as navigation to POIs. This mechanism is useful for widespread implementation on mobile phones for indoor navigation.

As the level of interest in a search is refined and narrowed, new levels of narrower content are created, until a top level of interest is reached containing a reduced amount of data, which allows for faster transfer of image data. Different levels of detail, according to POI definition, may be created as levels of a pyramid, from broadest level map of geometrical features "at the bottom" to narrowest level "at the top." The various level maps may be stored in a map file for faster processing on a mobile device. Applications ("Apps") on mobile devices may choose and retrieve the most appropriate level of POIs from the indoor map to display. The map generation may take place on a remote server, in which the user provides search input from the mobile device to the server, and a reduced set of information from the base level of the data structure is used to generate a map at a higher level that is less dense with data. The process of reducing complexity and data content (i.e., paring the data structure to a sub-structure) may be repeated automatically at the server until only the remaining POIs of sufficient importance are left, or the user provides additional input to change or refine the map results. The importance of a POI may be measured with a score that depends on the user's search key words and the area of bounding polygon of a POI. A server measures the importance score of each POI, merges small neighboring POIs into a complex-POI (or a POI group) with low importance score to create a larger bounding polygon to increase the importance score. A POI or complex-POI is chosen to be sent to the mobile device for display if its importance score is above a certain threshold.

An embodiment of the invention is directed to creating a group of indoor maps at multiple levels of detail according to POI search, and integrating the data structures into a map file in a pyramidal organization that may be accessed by a mobile device application. The map file may be stored remotely at the server, or one or more maps may be transmitted for storage on the mobile device.

The map file may include organization of the geometry of the scene. For example, each destination, or point of interest, (POI) in the scene may be described by a polygon line. The location (position) of the POI may be derived from actual geographical data (e.g., latitude and longitude), or in a self-defined coordinate system (e.g., where all position data are normalized to a bounding area), which may be computed offline and stored. For example, a POI may be represented by a simple polygon for the purpose of showing general location and an indication of size of the POI. Alternatively, the polygon representation may be complicated, in order to more accurately portray the physical layout of the POI. Furthermore, the polygon representation chosen may be normalized to scale within the bounding area (such as the property limits of a mall or department store), or they may be displayed as oversized to emphasize the POI in the display.

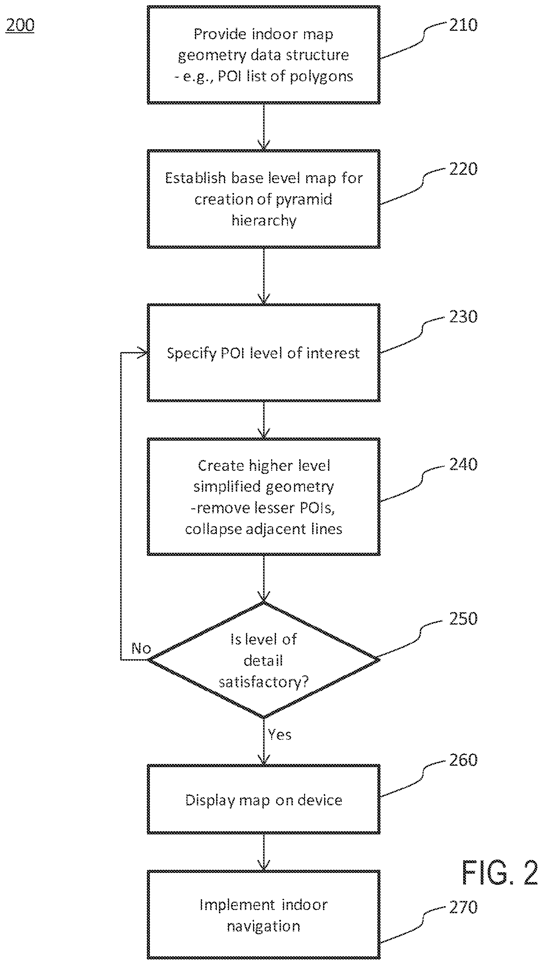

FIG. 2 illustrates a method 200 of generating a display map based on a pyramid hierarchical reduction of data from a base map data structure. In method block 210 a base level data structure of an indoor map is provided, containing the geometry of the indoor environment. The data structure includes all geometric details for features of all possible POIs, such as a mall, department store, office building, etc., and which may be stored as a file on a remote server.

In a 2-dimensional (2D) indoor map, a list of line loops or coordinate points for POIs in the scene is generated to define a polygon representing each POI. The polygon may be complex enough to provide a recognizable rendering of a POI (e.g., the layout of a restaurant or department store in a mall), however, an aspect of the disclosure is to provide a map with at least a threshold amount of detail for permitting location and navigation to the POI by providing a reduced amount of data over a communications network to the user mobile device.

Many potential points of interest (POIs) may be identified and located, where the POIs have different levels of relevance and importance based on a user's objective and preferred destination. The POIs may be represented, for example, by simple polygon approximations, cross-hairs, "pins," etc. depending on the size of the POI relative to the level of resolution of the map.

In method block 220, a base level map as a data structure may be created - the "base" of a pyramid - that may include a set of possible indoor features of the environment of a property of interest. In an example, there may be no filtering out of features that may be of interest in a particular context. At this level, polygon representations of POIs may be accurate to some standard level of detail (e.g., on the scale of 1 ft. increments, or larger) and stored in the base level of the pyramid data structure, but which may not be practically displayed at this level of detail, depending on the resolution of the display device (i.e., a feature of the polygon would have to be greater than one display pixel to be displayable). Metadata describing properties of the POI may also be included at this level.

In order to reduce data storage, data transfer, and processing demand on a mobile device, the base level data structure, from which any map may be constructed, may be stored on a server remote from mobile device. Depending on the processing capability and power storage capacity of the remote device, the base level data structure, or parts of it, may be downloaded to and maintained on the mobile device, where the downloaded portions of the data structure may be locally processed.

In method block 230, a user interacting with the mobile device may specify one or more points of interest. For example, the user may be a consumer searching for all shoe vendors in a shopping mall, or a safety inspection officer searching for all fire extinguisher and sprinkler shut-off control valve locations. The POI level of interest represents a list of features of interest to the user, which may be transmitted to the server (if such data has not been downloaded to the mobile device). The user application on the mobile device thus generates a list of data types (POIs), which may be transmitted to the remote server, for generation of a reduced ("thinned" or "child") data structure from which a map of reduced complexity may be constructed.

The list of POIs corresponding to the specified user input may be used, in method block 240, to create a higher level data structure, from which a map may be constructed, to simplify the map geometry by including only the specified POIs, or types of POIs, of sufficient interest, and removing others of lesser interest. The geometry of indoor objects may be simplified in various ways according to various criteria and/or level of importance. For example, line segments with joint angles that are close to 180 degree and adjoining parallel lines may be recursively collapsed. The angle threshold for collapsing line segments may be preset. This renders a map that may be composed from the POI list with less clutter from features of little or no interest to the user. In some cases two or more POIs may be adjacent, or may be related. For example, in a department store, there may be adjacent men's, women's and children's shoe departments. If the user defined POI search designates only "shoes," the three separate departments may be collapsed into a single structure, where the adjacent boundaries of the several departments are removed to render a single object for display representing all three. Thus, geometrical features representing objects that are not necessary for display at the new level may be removed.

In one embodiment, the child data structure may be transmitted to the mobile device, which is adapted to create a map with a user application and information in the child data structure. Alternatively, the simplified map may be constructed at the server, and transmitted to the mobile device using less bandwidth or transmission time.

In decision block 250, a determination is made, based on user response or, concurrently, on the context of the search for POIs, whether the level of detail is satisfactory for the user to locate one or more POIs. If the user decides, for example, that the search should be made further selective, such as seeking only "women's shoes," the method may resume at method block 230, where the POI level of interest is more narrowly specified. Alternatively, the user may wish to broaden the interest to locate vendors of both women's shoes and handbags, and the method continues until the level of detail is satisfactorily achieved in decision block 250. Similarly, a plurality of eateries in a food court may be collapsed into a single object, such as a "food court."

At that point, the mobile device assembles a data structure (whether from internally stored data or from the remote server) to construct a map for display (method block 260) based on the level of detail required to satisfy the interest level for the specified POIs. In this manner, the various levels of a map pyramid are stored in a map file as child data structures descending from the parent. The map file may be stored on a remote server or processor. The mobile device parses the map pyramid data from the file and dynamically chooses the most appropriate level of map to display. The selection of the most appropriate map level is based on a group of criteria, which may include the screen size, screen resolution, current zoom-in level, and/or battery level. In an example, the map level may be constructed at the remote server or processor to contain only the features that permit navigation when displayed on the mobile device. Thus, for example, navigation from a mall entrance to a particular store or food court may show a skeletal plan of the mall with the location of the mobile device and the destination location, with a line connector showing a path between them. The relevant walkway and the POI may be shown, but all other features may be absent from the displayed map, the consequence of which is a display with reduced data content that required a reduced amount of broadcast bandwidth and receiver stored energy to display relative to a fully detailed map.

Map information is stored in a multilevel hierarchical structure from coarse to fine. For example, at higher levels (i.e., large overview displays, as in a parent node in XML), some structures may be merged or ignored. For example, a food court may be formed as a data feature without indicating individual restaurants or food service counters, or a department store may be represented as a single entity without specifying/displaying individual departments. At higher levels (e.g., a child node in XML), structures may be described in more detail, e.g. with small line segments and polygons, and including metadata describing the POI structure. Data may be requested from a higher level in the pyramid by the mobile device to reduce the amount of data sent to the mobile device. For example, a display pertaining only to a food court may show individual dining services, or in a department store, the location of various departments.

The displayed map includes less than the maximum available data from the parent data structure. This has the advantage of requiring less data to be received by the mobile device and requires less power to process the thinner ("child") data structure and provide a simpler map without features that are of lesser or no interest.

The user may then seek directions to navigate (method block 270) from a current location to one or more of the remaining POIs. The result is that far less data, processing time and battery energy are required to serve the user with the desired functionality.

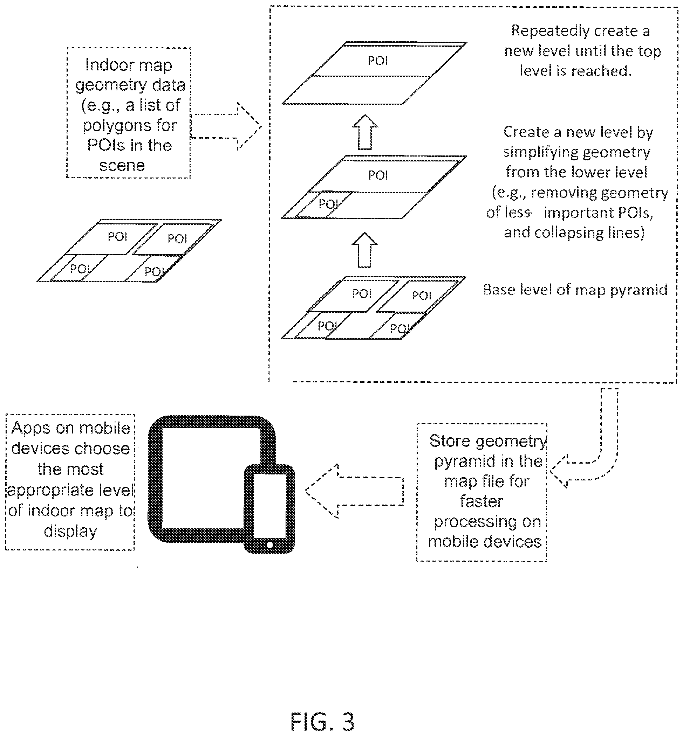

FIG. 3 illustrates graphically the method described in FIG. 2. An indoor map of geometry data of all POIs represented, for example, as a list of polygons is provided as a parent data structure. A base level map may be constructed to include a set of POIs. When less important POIs are absent from a list of specified POI types, a new level of child data structure, simplified by the absence of unimportant POIs, is formed, from which a simplified map may be formed. The process may be repeated for a narrower definition of POIs searched until a "top level" is reached, in which only the required POI locations are left to form a map. The application on the mobile device may then choose the level of map that is most appropriate to display, based on satisfying the criteria for including the POIs with sufficient level of importance according to the specified level of interest.

The reduced data structure of geometric data may be stored in a map file for faster retrieval and processing on the mobile device than may be done with the parent data structure to quickly and efficiently produce a simple and useful map, containing only features necessary for a given navigation task.

Map rendering is one of the most energy-costly parts in indoor navigation related applications on mobile devices. The cost is roughly proportional to the complexity of the scene geometry. It may be appreciated that the disclosed method can reduce the energy consumption and extend the battery life for mobile indoor navigation by rendering and loading maps from a remote server with the most appropriate level of geometry detail required for a task, such as navigating. Furthermore, display quality may be improved by rendering fewer geometric objects on the display, and reducing aliasing.

The previous description is provided to enable any person skilled in the art to practice the various aspects described herein. Various modifications to these aspects will be readily apparent to those skilled in the art, and the generic principles defined herein may be applied to previous or other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of providing a hierarchical pyramid of reduced density maps for display on a user device, comprising:
storing in a memory a base level data structure of a map of an environment, wherein the base level data structure represents a geometry of possible points of interest (POIs) in the environment;
a processor generating a base level map, from the base level data structure, as a parent node of a hierarchical pyramid data structure, and wherein the base level map comprises a number of polygon representations of POIs in the environment, and comprises a metadata defining POI properties;
receiving a list of POI types from the user device; and
creating a new level map, based on the list of POI types, as a child node of the hierarchical pyramid data structure, wherein the new level map includes a reduced number of polygon representations of POIs relative to the number of polygon representations of POIs in the base level map, wherein creating the new level map comprises determining an importance level of the POIs, based on the POI properties and the list of POI types, and eliminating from the base level map POIs for which the determined importance level is lower than a specified level of importance.

2. The method of claim 1, further comprising:
assigning the new level map as the current level map;
receiving an updated list of POI types, from the user device, wherein the updated list of POI types represents a narrower definition of POI features than represented by a most recent previous list of POI types
creating a higher level map from the current level map, based on the updated list of POI types, wherein the higher level map includes a further reduced number of polygon representations of POIs, wherein creating the higher level map comprises determining an updated importance level of the POIs, based on the updated list of POI types, and eliminating POIs in the current level map for which the determined updated importance level is lower than an updated specified level of importance; and
assigning the higher level map as the current level map.

3. The method of claim 2, further comprising:
receiving a new updated list of POI types, from the user device;
creating a new higher level map from the current level map, based on the new updated list of POI types, wherein the new higher level map includes a still further reduced number of polygon representations of POIs, wherein creating the new higher level map comprises determining a new updated importance level of the POIs, based on the new updated list of POI types, and eliminating POIs in the current level map for which the determined new updated importance level is lower than a new updated specified level of importance;
assigning the new higher level map as the current level map; and
repeating receiving a new updated list of POI types, from the user device, creating a new higher level map, and assigning the new higher level map as the current level map, until no new updated specified level of importance is received.

4. The method of claim 3, further comprising storing in a memory each new higher level map as a pyramidally arranged hierarchy of successively dependent child node data sub-structures.

5. The method of claim 4, further comprising:
obtaining a selection from the user device of a map level for display on the user device that is based on one or more of device screen size, and/or battery power level.

6. The method of claim 5, further comprising:
generating a map level at a remote server coupled to the user device by wireless communication, wherein the generated map level corresponds to the selection from the user; and
storing the generated map level in the hierarchical pyramid data structure on the remote server.

7. The method of claim 6, further comprising delivering the generated map level for display on the user device.

8. A method of facilitating navigation at a mobile device using map data in a hierarchical pyramid data structure, comprising:
specifying a list of features of interest by a user interacting with the mobile device, the features being associated with one or more points of interest (POIs) from among a plurality of POIs in an environment;
accessing a parent data file including a polygon representation of the plurality of POIs, wherein the parent data file comprises an hierarchical data structure of maps arranged pyramidally as map levels with successive levels of detail, and respectively different numbers of the plurality of POIs, wherein the respective numbers and the levels of detail are based on a given importance of the POIs according to the specified list of POI features;
retrieving a map from the parent data file, wherein the retrieved map has a map level that is based, at least in part, on specified criteria associated with the mobile device, and
displaying the retrieved map on the mobile device.

9. The method of claim 8, wherein the environment is an interior environment.

10. The method of claim 8, wherein the specified criteria associated with the mobile device include device screen size, or battery power level, or any combination thereof.

11. The method of claim 8, wherein the map is retrieved from a remote server.

12. The method of claim 8, further comprising:
receiving information identifying a target POI from among the plurality of POIs;
downloading, from a remote server, a navigation route from a current location of the mobile device to the target POI; and
displaying the navigation route in conjunction with the display of the map on the mobile device.

13. A computing apparatus configured to provide a hierarchical pyramid of reduced density maps for display on a user device, comprising:
a memory;
means for storing in the memory a base level data structure of a map of an environment, wherein the base level data structure represents a geometry of possible points of interest (POIs) in the environment;
means for generating a base level map, from the base level data structure, as a parent node of a hierarchical pyramid data structure, and wherein the base level map comprises a number of polygon representations of POIs in the environment, and comprises a metadata defining POI properties;
means for receiving a list of POI types from the user device; and
means for creating a new level map, based on the list of POI types, as a child node of the hierarchical pyramid data structure, wherein the new level map includes a reduced number of polygon representations of POIs relative to the number of polygon representations of POIs in the base-level map, the means for creating the new level map comprising
means for determining an importance level of the POIs in the base level map, based on the POI properties and the list of POI types, and
means for eliminating from the base level map POIs for which the determined importance level is lower than a specified level of importance.

14. A mobile device configured to use map data in a hierarchical pyramid data structure, comprising:
means for specifying a list of features of interest by a user interacting with the mobile device, the features being associated with one or more points of interest (POIs) from among a plurality of POIs in an environment;
means for accessing a parent data file including a polygon representation of the a plurality of POIs, wherein the parent data file comprises an hierarchical data structure of maps arranged pyramidally as map levels with successive levels of detail, and respectively different numbers of the plurality of POIs, wherein the respective numbers and the levels of detail are based on a given importance of the POIs according to the specified list of POI features;
means for retrieving a map from the parent data file, wherein the retrieved map has a map level that is based on a device screen size, or a zoom-in level of detail, or a battery power level or any sub-combination or combination thereof; and
means for displaying the retrieved map on the mobile device.

15. A non-transitory computer-readable medium containing instructions stored thereon, which, when executed by the computer cause the computer to perform the method of any one of claims 1 to 7 or 8 to 12.

## Patentansprüche

1. Ein Verfahren zum Vorsehen einer hierarchischen Pyramide von Karten mit reduzierter Dichte zur Anzeige auf einer Nutzereinrichtung, das Folgendes aufweist:
Speichern, in einem Speicher, einer Grund- bzw. Basisebenendatenstruktur einer Karte einer Umgebung, wobei die Basisebenendatenstruktur eine Geometrie möglicher POIs (POI = point of interest) in der Umgebung darstellt;
einen Prozessor, der eine Basisebenenkarte aus der Basisebenendatenstruktur generiert, und zwar als ein übergeordneter Knoten bzw. Parent-Node einer hierarchischen Pyramidendatenstruktur, und wobei die Basisebenenkarte eine Anzahl von Polygondarstellungen von POIs in der Umgebung aufweist, und Metadaten aufweist, die POI-Eigenschaften definieren;
Empfangen einer Liste von POI-Typen von der Nutzereinrichtung; und
Erzeugen einer Karte einer neuen Ebene basierend auf der Liste von POI-Typen als ein nachgeordneter Knoten bzw. Child-Node der hierarchischen Pyramidendatenstruktur, wobei die Karte der neuen Ebene eine reduzierte Anzahl von Polygondarstellungen von POIs relativ zu der Anzahl von Polygondarstellungen von POIs in der Basisebenenkarte beinhaltet, wobei das Erzeugen der Karte der neuen Ebene Bestimmen eines Wichtigkeits- bzw. Bedeutungsniveaus der POIs basierend auf den POI-Eigenschaften und der Liste von POI-Typen aufweist, und Eliminieren, aus der Basisebenenkarte, von POIs, für welche bestimmt wird, dass das Bedeutungsniveau geringer als ein spezifiziertes Niveau an Wichtigkeit bzw. Bedeutung ist.

2. Verfahren nach Anspruch 1, das weiter Folgendes aufweist:
Zuweisen der Karte der neuen Ebene als die Karte der aktuellen Ebene;
Empfangen einer aktualisierten Liste von POI-Typen von der Nutzereinrichtung, wobei die aktualisierte Liste von POI-Typen eine engere Definition von POI-Merkmalen darstellt, als durch eine letzte vorherige Liste von POI-Typen dargestellt wurde,
Erzeugen einer Karte einer höheren Ebene aus der Karte der aktuellen Ebene basierend auf der aktualisierten Liste von POI-Typen, wobei die Karte der höheren Ebene eine weiter reduzierte Anzahl von Polygondarstellungen von POIs aufweist, wobei das Erzeugen der Karte der höheren Ebene Bestimmen eines aktualisierten Wichtigkeits- bzw. Bedeutungsniveaus der POIs aufweist, und zwar basierend auf der aktualisierten Liste von POI-Typen, und
Eliminieren von POIs in der Karte der aktuellen Ebene, für welche das bestimmte aktualisierte Bedeutungsniveau geringer ist als ein aktualisiertes spezifiziertes Niveau an Bedeutung; und
Zuweisen der Karte der höheren Ebene als die Karte der aktuellen Ebene.

3. Verfahren nach Anspruch 2, das weiter Folgendes aufweist:
Empfangen einer neuen aktualisierten Liste von POI-Typen von der Nutzereinrichtung;
Erzeugen einer neuen Karte einer höheren Ebene aus der Karte der aktuellen Ebene basierend auf der neuen aktualisierten Liste von POI-Typen, wobei die neue Karte der höheren Ebene eine noch weiter verringerte Anzahl von Polygondarstellungen von POIs beinhaltet, wobei das Erzeugen der neuen Karte der höheren Ebene Bestimmen eines neuen aktualisierten Bedeutungsniveaus der POIs aufweist, und zwar basierend auf der neuen aktualisierten Liste von POI-Typen und Eliminieren von POIs in der Karte der aktuellen Ebene, für welche das bestimmte neue aktualisierte Bedeutungsniveau geringer ist als ein neues aktualisiertes spezifiziertes Niveau an Bedeutung;
Zuweisen der neuen Karte der höheren Ebene als die Karte der aktuellen Ebene; und
Wiederholen von Empfangen einer neuen aktualisierten Liste von POI-Typen von der Nutzereinrichtung, Erzeugen einer neuen Karte einer höheren Ebene und Zuweisen der neuen Karte der höheren Ebene als die Karte der aktuellen Ebene, bis kein neues aktualisiertes spezifiziertes Niveau an Bedeutung empfangen wird.

4. Verfahren nach Anspruch 3, das weiter Speichern, in einem Speicher, jeder neuen Karte einer höheren Ebene als eine pyramidenförmig angeordnete Hierarchie von aufeinanderfolgend abhängigen Datensubstrukturen von nachgeordneten Knoten bzw. Child-Nodes aufweist.

5. Verfahren nach Anspruch 4, das weiter Folgendes aufweist:
Erlangen einer Auswahl, von der Nutzereinrichtung, einer Kartenebene zur Anzeige auf der Nutzereinrichtung, die auf der Einrichtungsbildschirmgröße und/oder dem Batterieleistungspegel basiert.

6. Verfahren nach Anspruch 5, das weiter Folgendes aufweist:
Generieren einer Kartenebene an einem entfernten Server bzw. Fernserver, der an die Nutzereinrichtung mittels Drahtloskommunikation gekoppelt ist, wobei die generierte Kartenebene der Auswahl von dem Nutzer entspricht; und
Speichern der generierten Kartenebene in der hierarchischen Pyramidendatenstruktur auf dem Fernserver.

7. Verfahren nach Anspruch 6, das weiter Liefern der generierten Kartenebene zur Anzeige auf der Nutzereinrichtung aufweist.

8. Ein Verfahren zum Ermöglichen von Navigation an einer Mobileinrichtung unter Verwendung von Kartendaten in einer hierarchischen Pyramidendatenstruktur, das Folgendes aufweist:
Spezifizieren einer Liste von Merkmalen, die von Interesse sind, durch einen Nutzer, der mit der Mobileinrichtung interagiert, wobei die Merkmale mit ein oder mehreren POIs (POI = point of interest) aus einer Vielzahl von POIs in einer Umgebung assoziiert sind;
Zugreifen auf eine übergeordnete Datei bzw. Parent-Datei, die eine Polygondarstellung der Vielzahl von POIs beinhaltet, wobei die übergeordnete Datei eine hierarchische Datenstruktur von Karten aufweist, die pyramidenförmig angeordnet sind als Kartenebenen mit aufeinanderfolgenden Detaillierungsgraden, und mit entsprechend unterschiedliche Anzahlen der Vielzahl von POIs, wobei die entsprechenden Anzahlen und die Detaillierungsgrade auf einer gegebenen Bedeutung bzw. Wichtigkeit der POIs gemäß der spezifizierten Liste von POI-Merkmalen basieren;
Abrufen einer Karte aus der übergeordneten Datei, wobei die abgerufene Karte eine Kartenebene hat, die wenigstens teilweise auf spezifizierten Kriterien basiert, die mit der Mobileinrichtung assoziiert sind, und
Anzeigen der abgerufenen Karte auf der Mobileinrichtung.

9. Verfahren nach Anspruch 8, wobei die Umgebung eine Innenraumumgebung ist.

10. Verfahren nach Anspruch 8, wobei die spezifizierten Kriterien, die mit der Mobileinrichtung assoziiert sind, eine Einrichtungsbildschirmgröße oder einen Batterieleistungspegel oder eine Kombination davon beinhalten.

11. Verfahren nach Anspruch 8, wobei die Karte von einem Fernserver abgerufen wird.

12. Verfahren nach Anspruch 8, das weiter Folgendes aufweist,:
Empfangen von Information, die einen Ziel-POI aus der Vielzahl von POIs identifiziert;
Herunterladen, von einem Fernserver, einer Navigationsroute von einem aktuellen Standort der Mobileinrichtung zu dem Ziel-POI; und
Anzeigen der Navigationsroute in Verbindung mit der Anzeige der Karte auf der Mobileinrichtung.

13. Eine Rechnereinrichtung, die konfiguriert ist zum Vorsehen einer hierarchischen Pyramide von Karten mit reduzierter Dichte zur Anzeige auf einer Nutzereinrichtung, die Folgendes aufweist:
einen Speicher;
Mittel zum Speichern, in dem Speicher, einer Grund- bzw. Basisebenendatenstruktur einer Karte einer Umgebung, wobei die Basisebenendatenstruktur eine Geometrie möglicher POIs (POI = point of interest) in der Umgebung darstellt;
Mittel zum Generieren einer Basisebenenkarte aus der Basisebenendatenstruktur als ein übergeordneter Knoten bzw. Parent-Node einer hierarchischen Pyramidendatenstruktur, und wobei die Basisebenenkarte eine Anzahl von Polygondarstellungen von POIs in der Umgebung aufweist, und Metadaten aufweist, die POI-Eigenschaften definieren;
Mittel zum Empfangen einer Liste von POI-Typen von der Nutzereinrichtung; und
Mittel zum Erzeugen einer Karte einer neuen Ebene basierend auf der Liste von POI-Typen als ein nachgeordneter Knoten bzw. Child-Node der hierarchischen Pyramidendatenstruktur, wobei die Karte der neuen Ebene eine reduzierte Anzahl von Polygondarstellungen von POIs relativ zu der Anzahl von Polygondarstellungen von POIs in der Basisebenenkarte beinhaltet, wobei die Mittel zum Erzeugen der Karte der neuen Ebene Folgendes aufweisen
Mittel zum Bestimmen eines Wichtigkeits- bzw. Bedeutungsniveaus der POIs in der Basisebenenkarte basierend auf den POI-Eigenschaften und der Liste von POI-Typen, und
Mittel zum Eliminieren, aus der Basisebenenkarte, von POIs, für welche bestimmt wird, dass das Bedeutungsniveau geringer als ein spezifiziertes Niveau an Bedeutung bzw. Wichtigkeit ist.

14. Eine Mobileinrichtung, die konfiguriert ist zum Verwenden von Kartendaten in einer hierarchischen Pyramidendatenstruktur, die Folgendes aufweist:
Mittel zum Spezifizieren einer Liste von Merkmalen, die von Interesse sind, durch einen Nutzer, der mit der Mobileinrichtung interagiert, wobei die Merkmale mit ein oder mehreren POIs (POI = point of interest) aus einer Vielzahl von POIs in einer Umgebung assoziiert sind;
Mittel zum Zugreifen auf eine übergeordnete Datei bzw. Parent-Datei, die eine Polygondarstellung der Vielzahl von POIs beinhaltet, wobei die übergeordnete Datei eine hierarchische Datenstruktur von Karten aufweist, die pyramidenförmig angeordnet sind als Kartenebenen mit aufeinanderfolgenden Detaillierungsgraden und mit entsprechend unterschiedliche Anzahlen der Vielzahl von POIs, wobei die entsprechenden Anzahlen und die Detaillierungsgrade auf einer gegebenen Bedeutung bzw. Wichtigkeit der POIs gemäß der spezifizierten Liste von POI-Merkmalen basieren;
Mittel zum Abrufen einer Karte aus der übergeordneten Datei, wobei die abgerufene Karte eine Kartenebene hat, die auf einer Bildschirmgröße oder einem Zoom-In- bzw. Vergrößerungsdetaillierungsgrad oder einem Batterieleistungspegel oder irgendeiner Unterkombination oder Kombination davon basiert; und
Mittel zum Anzeigen der abgerufenen Karte auf der Mobileinrichtung.

15. Ein nicht transitorisches, computerlesbares Medium, das Instruktionen enthält, die darauf gespeichert sind, die, wenn sie durch einen Computer ausgeführt werden, den Computer veranlassen zum Durchführen des Verfahrens nach einem der Ansprüche 1 bis 7 oder 8 bis 12.

## Revendications

1. Procédé de fourniture d'une pyramide hiérarchique de cartes à densité réduite pour un affichage sur un dispositif d'utilisateur, comprenant :
stocker dans une mémoire une structure de données de niveau de base d'une carte d'un environnement, la structure de données de niveau de base représentant une géométrie de points d'intérêt possibles (POI) dans l'environnement ;
un processeur générant une carte de niveau de base, à partir de la structure de données de niveau de base, sous forme d'un noeud parent d'une structure de données pyramidale hiérarchique, et dans lequel la carte de niveau de base comprend un certain nombre de représentations de polygones de POI dans l'environnement, et comprend une métadonnée définissant des propriétés de POI ;
recevoir une liste de types de POI à partir du dispositif d'utilisateur ; et
créer une carte de nouveau niveau, sur la base de la liste de types de POI, sous forme d'un noeud enfant de la structure de données pyramidale hiérarchique, la carte de nouveau niveau comprenant un nombre réduit de représentations de polygones de POI par rapport au nombre de représentations de polygones de POI dans la carte de niveau de base, la création de la carte de nouveau niveau comprenant la détermination d'un niveau d'importance des POI, sur la base des propriétés de POI et de la liste de types de POI, et l'élimination dans la carte de niveau de base des POI pour lesquels le niveau d'importance déterminé est inférieur à un niveau d'importance spécifié.

2. Procédé selon la revendication 1, comprenant en outre :
affecter la carte de nouveau niveau comme carte de niveau courant ;
recevoir une liste mise à jour de types de POI, à partir du dispositif d'utilisateur, la liste mise à jour de types de POI représentant une définition de caractéristiques de POI plus étroite que celle représentée par une liste précédente plus récente de types de POI ;
créer une carte de niveau supérieur à partir de la carte de niveau courant, sur la base de la liste mise à jour de types de POI, la carte de niveau supérieur comprenant un autre nombre réduit de représentations de polygones de POI, la création de la carte de niveau supérieur comprenant la détermination d'un niveau d'importance mis à jour des POI, sur la base de la liste mise à jour de types de POI, et l'élimination dans la carte de niveau courant des POI pour lesquels le niveau d'importance mis à jour déterminé est inférieur à un niveau d'importance spécifié mis à jour ; et
affecter la carte de niveau supérieur comme carte de niveau courant.

3. Procédé selon la revendication 2, comprenant en outre :
recevoir une nouvelle liste mise à jour de types de POI, à partir du dispositif d'utilisateur ;
créer une carte de nouveau niveau supérieur à partir de la carte de niveau courant, sur la base de la nouvelle liste mise à jour de types de POI, la carte de nouveau niveau supérieur comprenant un nombre encore plus réduit de représentations de polygones de POI, la création de la carte de nouveau niveau supérieur comprenant la détermination d'un nouveau niveau d'importance mis à jour des POI, sur la base de la nouvelle liste mise à jour de types de POI, et l'élimination dans la carte de niveau courant des POI pour lesquels le nouveau niveau d'importance mis à jour déterminé est inférieur à un nouveau niveau d'importance spécifié mis à jour ;
affecter la carte de nouveau niveau supérieur comme carte de niveau courant ; et
répéter la réception d'une nouvelle liste mise à jour de types de POI, à partir du dispositif d'utilisateur, créer une carte de nouveau niveau supérieur, et affecter la carte de nouveau niveau supérieur comme carte de niveau courant, jusqu'à ce que le nouveau niveau d'importance spécifié mis à jour soit reçu.

4. Procédé selon la revendication 3, comprenant en outre le stockage dans une mémoire de chaque carte de nouveau niveau supérieur sous forme d'une hiérarchie agencée de manière pyramidale de sous-structures de données de noeud enfant successivement dépendantes.

5. Procédé selon la revendication 4, comprenant en outre :
obtenir une sélection à partir du dispositif d'utilisateur d'un niveau de carte pour un affichage sur le dispositif d'utilisateur qui est basé sur un ou plusieurs éléments parmi la taille d'écran de dispositif, et/ou le niveau d'alimentation de batterie.

6. Procédé selon la revendication 5, comprenant en outre :
générer un niveau de carte au niveau d'un serveur distant couplé au dispositif d'utilisateur par une communication sans fil, le niveau de carte généré correspondant à la sélection provenant de l'utilisateur ; et
stocker le niveau de carte généré dans la structure de données pyramidale hiérarchique sur le serveur distant.

7. Procédé selon la revendication 6, comprenant en outre la fourniture du niveau de carte généré pour affichage sur le dispositif d'utilisateur.

8. Procédé pour faciliter la navigation au niveau d'un dispositif mobile en utilisant des données de cartes dans une structure de données pyramidale hiérarchique, comprenant :
spécifier une liste de caractéristiques d'intérêt par un utilisateur interagissant avec le dispositif mobile, les caractéristiques étant associées à un ou plusieurs points d'intérêt (POI) parmi une pluralité de POI dans un environnement ;
accéder à un fichier de données parent comprenant une représentation polygonale de la pluralité de POI, le fichier de données parent comprenant une structure de données hiérarchique de cartes agencée de façon pyramidale sous forme de niveaux de carte avec des niveaux de détail successifs, et respectivement des nombres différents de la pluralité de POI, les nombres et les niveaux de détail respectifs étant basés sur une importance donnée des POI conformément à la liste spécifiée de caractéristiques de POI ;
récupérer une carte dans le fichier de données parent, la carte récupérée ayant un niveau de carte qui est basé, au moins en partie, sur des critères spécifiés associés au dispositif mobile, et
afficher la carte récupérée sur le dispositif mobile.

9. Procédé selon la revendication 8, dans lequel l'environnement est un environnement d'intérieur.

10. Procédé selon la revendication 8, dans lequel le critère spécifié associé au dispositif mobile comprend une taille d'écran de dispositif, ou un niveau d'alimentation de batterie, ou une de leurs combinaisons.

11. Procédé selon la revendication 8, dans lequel la carte est récupérée dans un serveur distant.

12. Procédé selon la revendication 8, comprenant en outre :
recevoir des informations identifiant un POI cible parmi la pluralité de POI ;
télécharger, à partir d'un serveur distant, un itinéraire de navigation à partir d'un emplacement courant du dispositif mobile jusqu'au POI cible ; et
afficher l'itinéraire de navigation conjointement avec l'affichage de la carte sur le dispositif mobile.

13. Dispositif informatique agencé pour fournir une pyramide hiérarchique de cartes à densité réduite pour un affichage sur un dispositif d'utilisateur, comprenant :
une mémoire ;
des moyens pour stocker dans la mémoire une structure de données de niveau de base d'une carte d'un environnement, la structure de données de niveau de base représentant une géométrie de points d'intérêt possibles (POI) dans l'environnement,
des moyens pour générer une carte de niveau de base, à partir de la structure de données de niveau de base, sous forme d'un noeud parent d'une structure de données pyramidale hiérarchique, et la carte de niveau de base comprenant un certain nombre de représentations de polygones de POI dans l'environnement, et comprenant une métadonnée définissant des propriétés de POI ;
des moyens pour recevoir une liste de types de POI à partir du dispositif d'utilisateur ; et
des moyens pour créer une carte de nouveau niveau, sur la base de la liste de type de POI, sous forme d'un noeud enfant de la structure de données pyramidale hiérarchique, la carte de nouveau niveau comprenant un nombre réduit de représentations de polygones de POI par rapport au nombre de représentations de POI dans la carte de niveau de base, les moyens pour créer la carte de nouveau niveau comprenant
des moyens pour déterminer un niveau d'importance des POI dans la carte de niveau de base, sur la base des propriétés de POI et de la liste de types de POI, et
des moyens pour éliminer de la carte de niveau de base les POI pour lesquels le niveau d'importance déterminé est inférieur à un niveau d'importance spécifié.

14. Dispositif mobile agencé pour utiliser des données de carte dans une structure de données pyramidale hiérarchique, comprenant :
des moyens pour spécifier une liste de caractéristiques d'intérêt par un utilisateur interagissant avec le dispositif mobile, les caractéristiques étant associées à un ou plusieurs points d'intérêt (POI) parmi une pluralité de POI dans un environnement ;
des moyens pour accéder à un fichier de données parent comprenant une représentation polygonale de la pluralité de POI, le fichier de données parent comprenant une structure de données hiérarchique de cartes agencée de façon pyramidale sous forme de niveaux de carte avec des niveaux de détail successifs, et respectivement des nombres différents de la pluralité de POI, les nombres et les niveaux de détail respectifs étant basés sur une importance donnée des POI conformément à la liste spécifiée de caractéristiques de POI ;
des moyens pour récupérer une carte dans le fichier de données parent, la carte récupérée ayant un niveau de carte qui est basé sur une taille d'écran de dispositif, un niveau de grossissement de détail, ou un niveau d'alimentation de batterie ou toute sous-combinaison ou combinaison de cela ; et
des moyens pour afficher la carte récupérée sur le dispositif mobile.

15. Support non transitoire lisible par un ordinateur contenant des instructions mémorisées sur lui, instructions qui lorsqu'elles sont exécutées par l'ordinateur amènent l'ordinateur à réaliser le procédé de l'une quelconque des revendications 1 à 7 ou 8 à 12.
